# EUROPEAN PATENT SPECIFICATION

(11) **EP 2 405 507 B1**
(45) Date of publication and mention of the grant of the patent: **25.02.2015**
(21) Application number: 11250027.7
(22) Date of filing: 12.01.2011
(51) Int. Cl.: H01M 2/02, H01M 2/34

(54) **Rechargeable battery**
Wiederaufladbare Batterie
Batterie rechargeable

(30) Priority: 08.07.2010 US 362523 P; 17.12.2010 US 971621
(43) Date of publication of application: 11.01.2012
(73) Proprietor: Samsung SDI Co., Ltd., Yongin-si, Gyeonggi-do (KR)
(72) Inventor: Park, Sang-Hun, Yongin-si Gyeonggi-do (KR)
(74) Representative: Mounteney, Simon James

(56) References cited:
- US-A1- 2002 150 815
- US-A1- 2006 099 503
- US-A1- 2006 166 089
- US-A1- 2010 092 805

## Description

### BACKGROUND OF THE INVENTION

### (a) Field of the Invention

The present invention relates to a rechargeable battery wherein a thermally responsive device is attached to a pouch.

### (b) Description of the Related Art

US 2006/099503 A1 discloses a lithium polymer battery comprising an internal sheath, reinforcement members, and an external sheath and a method for manufacturing the same.

US 2006/166089 A1 discloses packaging of a box-shaped or plate-shaped battery pack.

US 2002/0150815 A1 discloses a battery pack comprising a press portion for pressing the heat-sensitive current blocking element on the inner surface of the outer case.

With the development of mobile devices, the demand for rechargeable batteries has increased. In particular, high-energy, down-sized, light, and slim mobile devices have been required. For such devices, a rechargeable battery is formed to be flat using a polymer solid electrolyte film. In such a case a lithium ion polymer battery is particularly effective at delivering the desired slimness of the battery.

In a lithium ion polymer rechargeable battery, an electrode assembly is typically formed by stacking a positive electrode and a negative electrode with a polymer solid electrolyte film therebetween. The lithium ion polymer rechargeable battery includes a pouch that accommodates the electrode assembly by thermally fusing peripheral portions of the pouch.

A positive terminal is connected to a positive electrode of the electrode assembly and a negative terminal is connected to a negative electrode thereof. These terminals extend out to one side of the thermally fused pouch. The positive terminal and the negative terminal are electrically connected to a protection circuit module (PCM) on which protective circuit components is mounted.

The protection circuit module is formed to prevent the overcharging, over discharging, overcurrent, and short circuit between battery pack cells of the rechargeable battery. In addition, a thermally responsive device such as a resistor element having a positive temperature coefficient is used between the protection circuit module and the positive terminal.

When a resistor element is employed, it electrically isolates the positive terminal from the protective circuit module when the temperature of the rechargeable battery reaches the predetermined risk value and when the temperature of the rechargeable battery reaches the setup safety value it reconnects the positive terminal to the protective circuit module.

A need exists for a resistor element or other thermally responsive device having an excellent temperature detecting performance for the rechargeable battery. To this end, a need exists for a thermal conductive structure where the thermally responsive device closely contacts the rechargeable battery that emits heat.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery with a thermally responsive device having an improved temperature detecting performance.

Accordingly, the invention provides a rechargeable battery as set out in Claim 1. Preferred features of the invention are set out in Claims 2 to 9.

An embodiment of the invention therefore ensures close contact between the thermally responsive device and the pouch due to the action of the support member. Therefore, the temperature detecting performance of the thermally responsive device can be improved.

### BRIEF DESCRIPTION OF THE DRAWINGS

FIG. 1 is perspective view of a rechargeable battery according to a first exemplary embodiment of the present invention;
FIG. 2 is an exploded perspective view of a pouch and a support member in FIG. 1;
FIG. 3A is an exploded perspective view of a part of an electrode assembly;
FIG. 3B is a perspective view of a jelly-roll type electrode assembly;
FIG. 4 is an exploded perspective view of a positive terminal and a resistor element;
FIG. 5 is a coupled perspective view of FIG. 4;
FIG. 6 is a cross-sectional view taken along line VI-VI of FIG. 1;
FIG. 7 is an exploded perspective view of a frame and a support member in the rechargeable battery according to a second embodiment of the present invention;
FIG. 8 is a cross-sectional view taken along line VIII-VIII of FIG. 7;
FIG. 9 is a perspective view of the rechargeable battery according to a third embodiment of the present invention;
FIG. 10 is an exploded perspective view of a pouch and a support member of FIG. 9; and
FIG. 11 is a cross-sectional view taken along line XI-XI of FIG. 9.

### DETAILED DESCRIPTION OF THE EMBODIMENTS

Hereinafter, the present invention will be described more fully with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

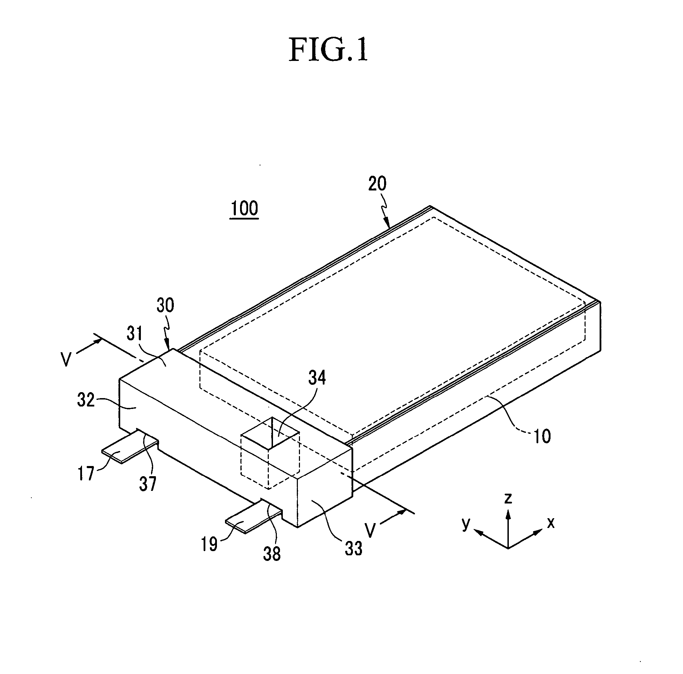

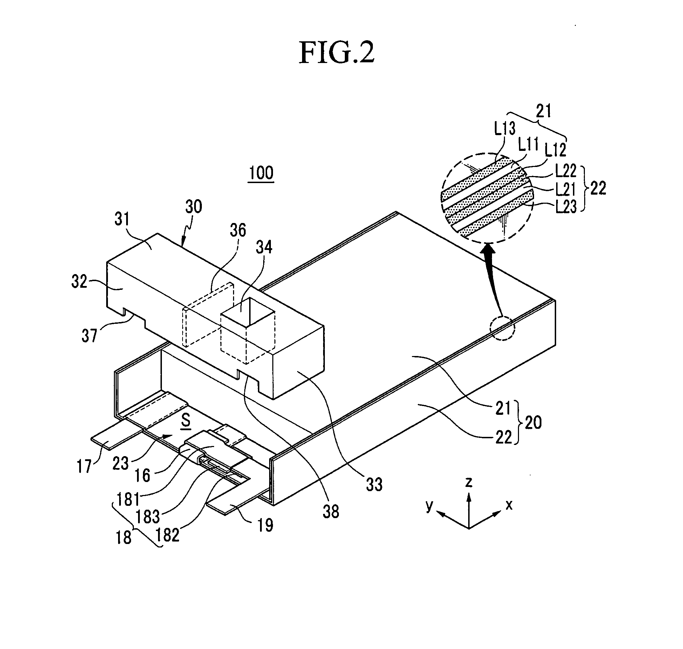

FIG. 1 is perspective view of a rechargeable battery according to a first embodiment of the present invention and FIG. 2 is an exploded perspective view of a pouch and a support memberin FIG. 1. Referring to FIGS. 1 and 2, the rechargeable battery 100 includes an electrode assembly 10, a pouch 20 into which the electrode assembly 10 is embedded, and a support member30 coupled or attached to the pouch 20.

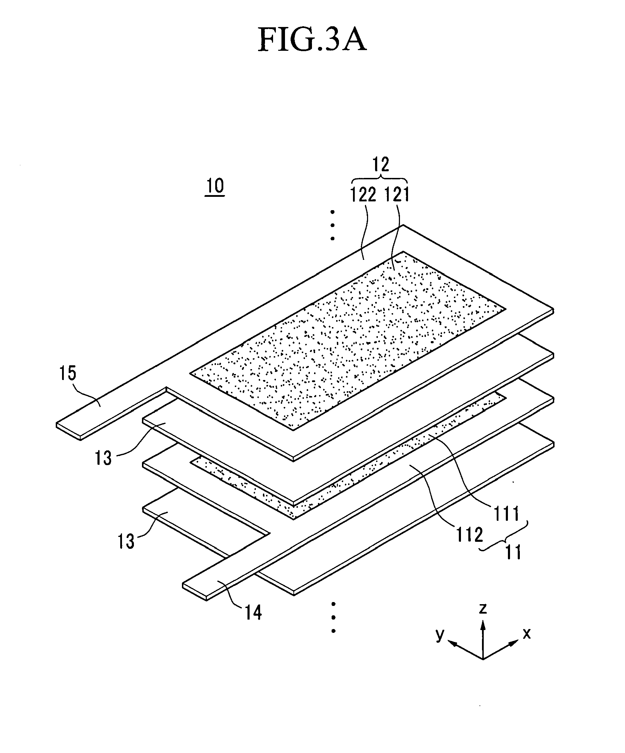

FIG. 3A is an exploded perspective view of a part of an electrode assembly. Referring to FIG. 3A, the electrode assembly 10 is formed by stacking a first electrode 11 (for convenience, referred to as "positive electrode") formed of single plates and a second electrode 12 (for convenience, referred to as "negative electrode"), putting a separator 13 therebetween.

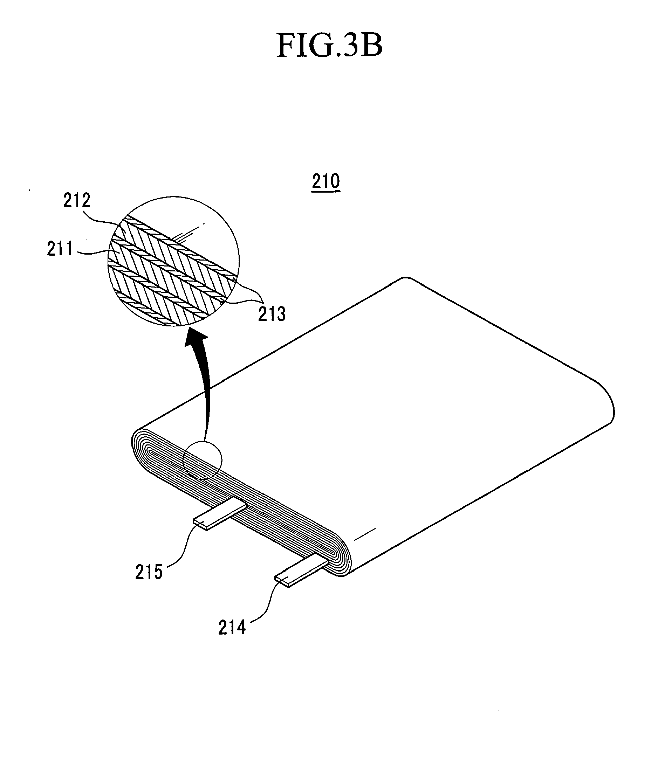

FIG. 3B is a perspective view of a jelly-roll type electrode assembly. Referring to FIG. 3B, the electrode assembly 210 may be formed in a jelly roll form by winding the positive electrode 211, the separator 213, and the negative electrode 212.

In addition, the electrode assembly may be formed in a stacking structure where the positive electrode, the separator, and the negative electrode is folded in a zigzag manner (not shown). The separator may be formed of an electrolyte film that passes through lithium ions.

As shown in FIG. 3A, when referring to the stacking structure of the single plates, the positive electrode 11 includes a coating unit 111 where an active material is applied to a current collector of a metal thin film, a non-coated portion 112 on which the active material is not applied, and a first tab 14 (for convenience, referred to as "positive tab") connected to one side of the non-coated portion 112. A plurality of positive tabs 14 connected to the stacked positive electrodes 11 are stacked and bonded to each other (not shown). For example, the positive tabs may be pressed to each other and may be welded by a welding manner.

The cathode 12 includes a coating portion 121 where the active material of the positive electrode 11 and other active materials are applied on the current collector of the metal thin film, a non-coated portion 122 on which the active material is not applied, and a second tab 15 (for convenience, referred to as "positive tab") connected to one side of the non-coated portion 122. A plurality of negative tabs 15 connected to the stacked negative electrodes 12 are stacked and bonded to each other (not shown). For example, the negative tabs may be pressed to each other and may be bonded by a welding manner.

The positive tab 14 and 214 and the negative tab 15 and 215 are drawn out in the co-plane (yz plane) of the electrode assembly 10 and is each disposed at both ends (both ends in a y direction). In addition, the positive tab and the negative tab may be disposed at an opposite side (referring to FIG. 1, both ends in an x-axis direction) of the electrode assembly (not shown).

Referring back to FIGS. 1 and 2, the pouch 20 may be formed of upper pouch layer 21 and lower pouch layer 22 that cover the outside of the electrode assembly 10. The lower pouch layer 22 includes a pressed groove to accommodate the electrode assembly 10 before thermal fusion, and the upper pouch layer 21 has a plate-like structure. The electrode assembly 10 is accommodated by the lower pouch layer 22 and then the upper and lower pouch layers 21 and 22 are fused together to form the pouch 20.

The upper and lower pouch layers 21 and 22 are multi-layered structures that include intermediate layers L11 and L21, inner layers L12 and L22 formed on the inner surface of the intermediate layers L11 and L21, and outer layers L13 and L23 that are formed on the outer surface of the intermediate layers L11 and L21. For example, the intermediate layers L11 and L21 are made of metal foil (e.g., aluminum) in order to maintain mechanical strength. The inner layers L12 and L22 may be made of polymer film in order to protect the intermediate layers L11 and L21 from electrolyte and to prevent short circuit between the positive and negative electrodes and between the positive and negative terminals. The outer layers L13 and L23 may be made of nylon in order to protect the intermediate layers L12 and L21.

For example, the electrode assembly 10 may be formed in a rectangular plate structure. Therefore, the rechargeable battery 100 formed by covering the electrode assembly 10 with the pouch 20 entirely forms a rectangular plate structure. That is, the pouch 20 is flexible and forms a nearly rectangular plate structure.

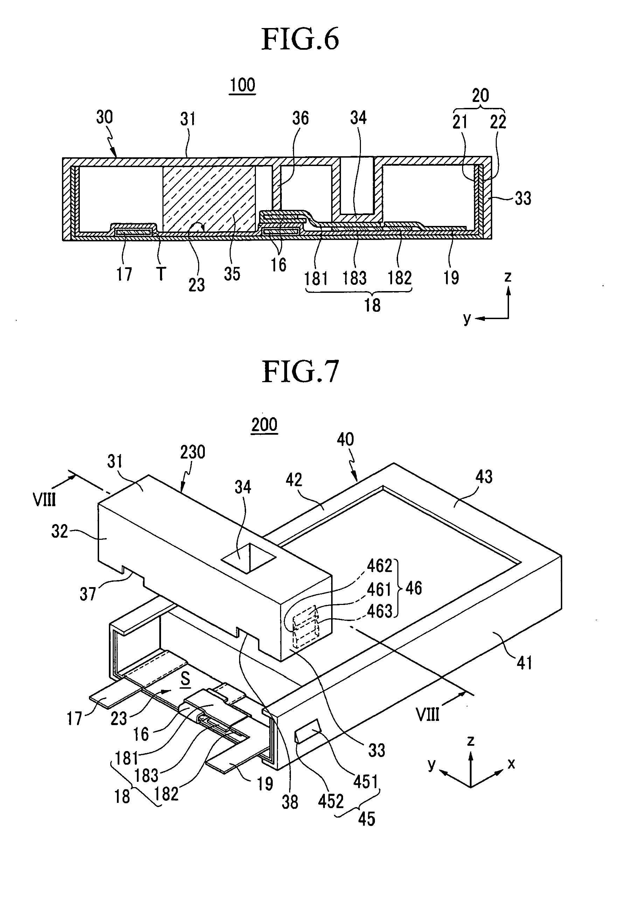

The first terminal (for convenience, referred to as "positive terminal") 16 and the second terminal (for convenience, referred to as "negative terminal") 17 are connected to the positive tab 14 and the negative tab 15, respectively, to be drawn out outside of the pouch 20, such that the electrode assembly 10 is electrically connected to the outside of the pouch 20. The positive terminal 16 and the negative terminal 17 are disposed to penetrate through a support portion 23 extending from one side (yz plane) of the pouch 20. Here, the positive terminal 16 and negative terminal 17 has an electrically isolated structure from each other (See FIG. 6) via an insulation tape T.

In addition, the upper pouch layer 21 accommodates the electrode assembly 10 to be thermally fused to the lower pouch layer 22 based on the flat bottom of the lower pouch layer 22 of the pouch 20 at the drawing out side of the positive terminal 16 and the negative terminal 17 of the pouch 20. Therefore, the pouch 20 forms a space portion (S) on the upper side of the support portion 23 at the draw out side of the positive terminal 16 and the negative terminal 17. That is, in FIG. 2, the space portion (S) is formed to close one side (lower side) of a z-axis direction, both sides (left and right sides) of a y-axis direction , and one side (rear side) of an x-axis direction and open the other side (front) of a y-axis direction and the other side (upper side) of a z-axis direction.

Meanwhile, the rechargeable battery 100 includes a protection circuit module (not shown) in which protection circuit elements are mounted on a circuit board in order to protect against overcharging, overdischarging, overcurrent, and shorting between battery pack cells. The negative terminal 17 may be directly connected to the protection circuit module and the positive terminal 16 may be connected to the protection circuit module via a resistor element 18. The resistor element may be directly connected to the protection circuit module (not shown) but may be connected thereto via the connection tab 19 (see FIG. 2). In this embodiment, the resistor element 18 has a positive temperature coefficient. The connection tab 19 may be formed of a nickel tab. The resistor element 18 is one example of a thermally responsive device. Other embodiments of the invention may use different kinds of thermally responsive devices, such as a thermal fuse, for example.

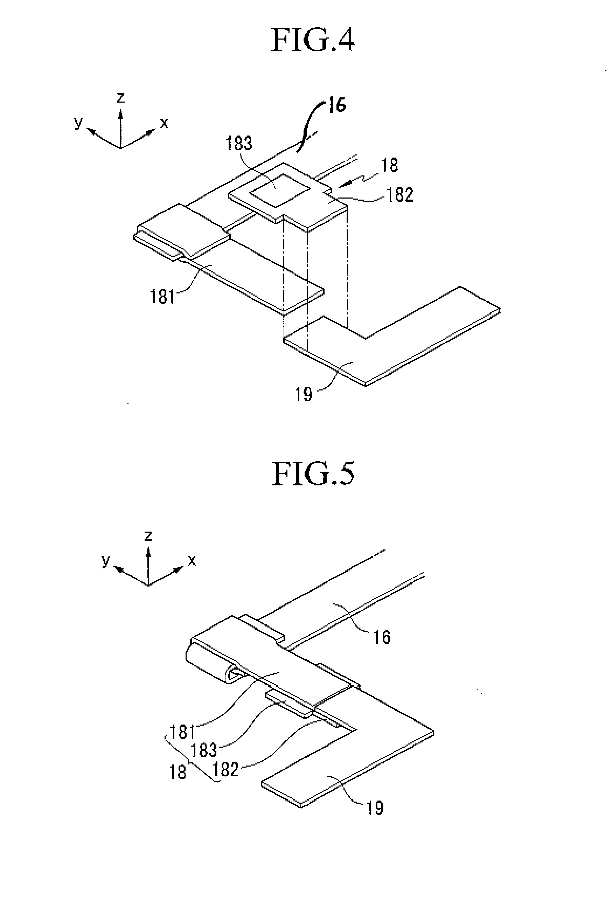

FIG. 4 is an exploded perspective view of a positive terminal and a resistor element. Referring to FIG. 4, one side of the resistor element 18 is connected to the positive terminal 16. For example, the resistor element 18 includes the first and second connection parts 181 and 182 connected to both sides thereof and a conductive portion 183 formed on one surface thereof to conducts heat. The first connection portion 181 winds the positive terminal 16 to be welded to the positive terminal 16 and the second connection portion 182 is welded to the connection tab 19.

Referring to FIG. 5, the first connection portion 181 is connected to the positive terminal 16 by bending the positive terminal 16 to which the connection tab 19 and the resistor element 18 are connected. Therefore, the positive terminal 16 and the first connection portion 181 forms a multi-layered connection structure.

In the state where the positive terminal 16 and the first connection portion 181 are completed, the first and second connection units 181 and 182 of the resistor element 18 are exposed to the upper portion of the space portion (S) and the conductive portion 183 contacts the support portion 23.

That is, the conductive portion 183 of the resistor element 18 contacts the pouch 20, namely the upper pouch layer 21. Therefore, heat generated in the electrode assembly 10 and transferred from the upper pouch layer 21 is transferred to the resistor element 18 through the conductive portion 183. Thereby, the resistor element 18 detects the temperature of the rechargeable battery 100.

As described above, outside the pouch 20, the positive terminal 16 is connected to the resistor element 18 and the connection tab 19 is connected to the resistor element 18. The connection tab 19 is electrically connected to the protecting circuit module (not shown) together with the negative terminal 17.

FIG. 6 is a cross-sectional view taken along line VI-VI of FIG. 1. Referring to FIG. 6, in the space portion (S), the support member 30 is coupled to the pouch 20 to contact the resistor element 18, thereby maintaining close contact between the pouch 20 and one surface of the resistor element 18. In other words, the conductive portion 183 of the resistor element 18 more closely contacts the upper pouch layer 21 of the pouch 20 due to the action of the support member 30.

In this embodiment, the support member 30 is formed to have a structure corresponding to the opening structure of the space portion (S), in order to cover the space portion (S) of the pouch 20. In other words, the support member 30 includes an upper portion 31, a front portion 32 and a pair of side portions 33 that are each connected to the upper portion 31, and the front portion 32 at both ends thereof by a plastic injection process.

When the support member 30 is coupled with the pouch 20, the space portion S is closed at one side of the pouch 20 by the upper portion 31 and the front portion 32 of the support member 30. The side portions 33 closely contact and receives the pouch 20 at each side of the space portion (S). In addition, the support member 30 includes a protrusion 34 corresponding to the resistor element 18 to contact the resistor element 18. The protrusion 34 is formed to extend down from the upper portion 31 to the inner side thereof.

The support member 30 is attached and bonded to the pouch 20 via a double-sided adhesive tape 35. In the space portion (S), when the support member 30 is attached to the thermal fusing portion 23 of the pouch 20 by the double-sided adhesive tape 35, the protrusion 34 of the support member 30 presses the resistor element 18 by the attachment force of the double-sided adhesive tape 35. Therefore, the conducting portion 183 of the resistor element 18 closely contacts the thermal fusing portion 23 of the pouch 20. That is, the temperature detection performance for the resistor element 18 for the pouch 20 can be improved.

The support member 30 further includes a rib 36 that protrudes into the inside from one side of the protrusion 34 to connect the upper portion 31 and the front portion 32 to each other. The rib 36 is seated on the support portion 23 of the space portion (S) of the pouch 20, thereby improving the mechanical strength of the support member 30 in the space portion (S). The rib 36 is formed at a position corresponding to the bent positive terminal 16 and the first connection portion 181. When the support member 30 is coupled to the pouch 20, the rib 36 is deflected to press the welded positive terminal 16 and first connection unit 181, thereby making it possible to more improve the electrical connection performance between the positive terminal 16 and the first connection portion 181.

Referring back to FIGS. 1 and 2, the support member 30 includes a first opening 37 and a second opening 38 that each correspond in position to a respective one of the negative terminal 17 and connection tab 19. In other words, the first and second openings 37 and 38 are formed at the lower end of the front portion 32 to facilitate the location of the support member 30 in the space portion (S), whilst supporting the negative terminal 17 and the connection tab 19 when the support member 30 is coupled to the pouch 20.

Hereinafter, various further embodiments of the present invention will be described. When these embodiments compared with the first embodiment, the description of the same configuration in these embodiments will be omitted and different components will be compared and described.

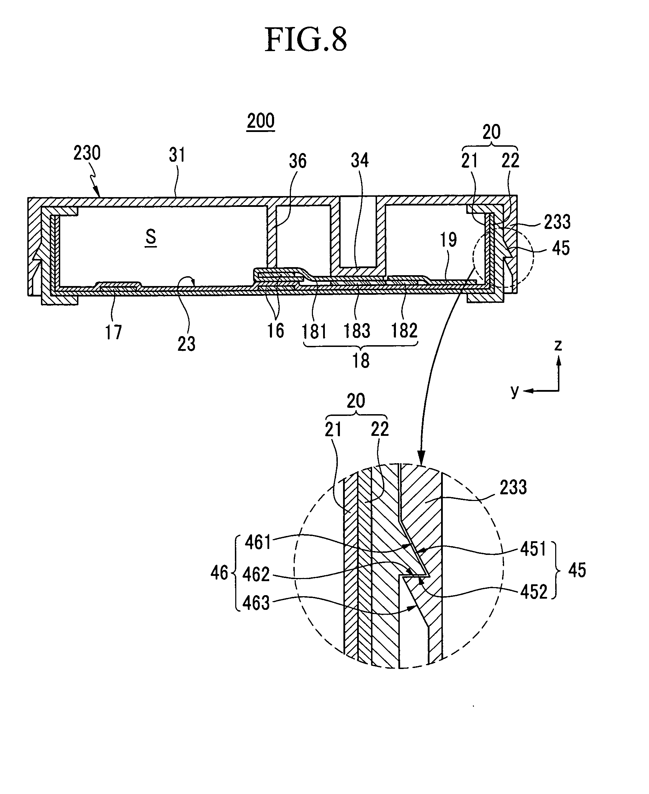

FIG. 7 is an exploded perspective view of a frame and a support member in a rechargeable battery according to a second embodiment of the present invention and FIG. 8 is a cross-sectional view taken along line VIII-VIII of FIG. 7. Referring to FIGS. 7 and 8, in a rechargeable battery 200 of the second embodiment, a frame 40 is further included. The rechargeable battery 200 is formed as a structure where the support member 230 is coupled to the frame 40.

The frame 40 is formed as a rectangular plate structure that covers three surfaces of the outside of the pouch 20. The support member 230 is formed so that it is coupled to the frame 40 to cover one surface of the outside of the pouch 20.

In this embodiment, the frame 40 includes first and second side portions 41 and 42 that are formed on opposite sides in the y-axis direction and receive corresponding portions of the pouch 20, and a third side portion 43 that is formed on one side in the x-axis direction to connect the first and second side portions 41 and 42 and receive a corresponding portion of the pouch 20.

The first, second, and third side parts 41, 42, and 43 each have a channel structure that is opened on an inner side to receive the respective corresponding portion of the pouch 20. The frame 40 may be formed of plastic using an injection moulding process. In this embodiment, the first, second, and third side portions 41, 42, and 43 form the strong coupling structure while pressing each of the corresponding portions of the pouch 20 in the z-axis direction (up direction) by its own elasticity.

The first and second side portions 41 and 42 each include a protrusion 45 that projects externally. Each protrusion 45 has inclination in the z-axis direction, that is, a direction progressing from the upper portion to the lower portion, and includes an inclined surface 451 and a horizontal surface 452 on the lower end of the inclined surface 451.

The support member 230 includes a correspondingly configured recess on each side portion 233, thereby forming a receiving portion 46 for coupling to a respective one of the protrusions 45.

When each side portion 233 of the support member 230 is positioned at a respective one of the first and second side portions 41 and 42 of the frame 40 and pressed down in the z-axis direction, the end of the horizontal surface 462 of the receiving portion 46 moves over the inclined surface 451 of the protrusion 45, thereby coupling the receiving portion 46 to the protrusion 45. By this coupling, the support member 230 is coupled to the frame 40.

In addition, each side portion 233 of the support member 230 is formed to include an inclined surface 463 below the horizontal surface 462 so as to prevent it from being spread in the y-axis direction by elasticity during assembly. The horizontal surface 462 and the inclined surface 463 of the receiving portion 46 form another protrusion that supports the protrusion 45 of the frame 40.

When the coupling between the support member 230 and the frame 40 is completed, the horizontal surface 462 of the receiving portion 46 closely contacts the horizontal surface 452 of the protrusion 45 to prevent the support member 230 from being separated from the frame 40 in the direction opposite to the insertion, that is, the z-axis direction.

This embodiment in which the receiving portion 46 of the frame 40 is coupled to the first protrusion 45 of the support member 230 more easily facilitates the installation of the support member 230, as compared to the first embodiment which employs the double-sided adhesive tape 35.

As compared to the first embodiment, the second embodiment strongly forms a contact pressurizing force urging the resistor element 18 against the pouch 20 via the protrusion 34 in the space portion (S), thereby making it possible to improve the temperature detection performance still further.

As compared to the first embodiment, the second embodiment forms a strong contact pressurizing force between the positive terminal 16 and the first connection portion 181 via the rib 36, thereby making it possible to improve the welding performance of the positive terminal 16 and the first connection portion 181.

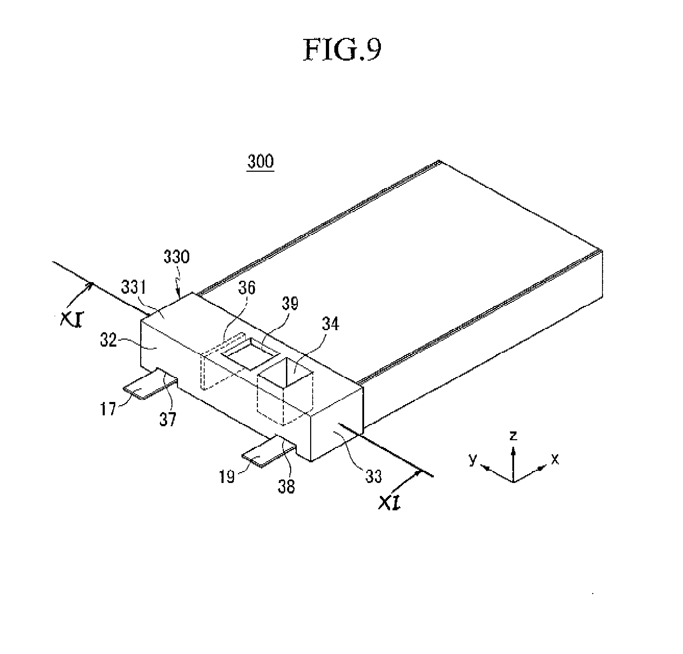

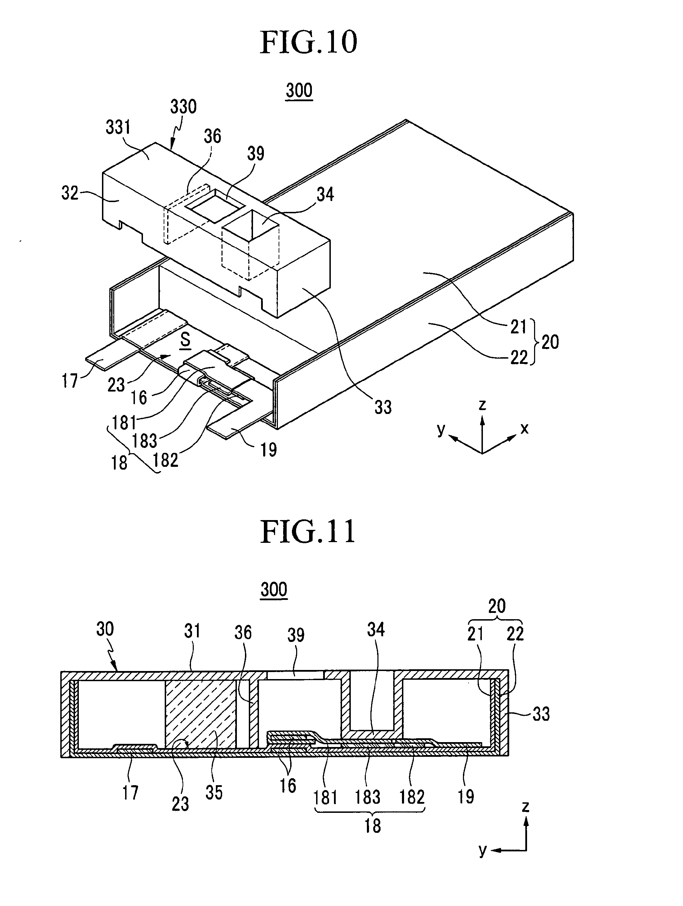

FIG. 9 is a perspective view of a rechargeable battery according to a third embodiment of the present invention, FIG. 10 is an exploded perspective view of a pouch and a support member of FIG. 9, and FIG. 11 is a cross-sectional view taken along line XI-XI of FIG. 9.

Referring to FIGS. 9 to 11, a welding hole 39 is further formed in a support member 330, as compared to the first embodiment. The welding hole 39 is formed on the upper portion 331 of the support member 330 corresponding to the welded positive terminal 16 and first connection portion 181.

The welding hole 39 corresponds in position to the first connection portion 181 of the resistor element 18. During assembly and the support member 330 is coupled to the pouch 20 and then the positive terminal 16 can be welded to the first connection portion 181 via the welding hole 39. The third embodiment therefore facilitates various manufacturing processes of the rechargeable battery 300.

In the support member 330, the rib 336 is formed to correspond to the position of the positive terminal 16 and the side of the first connection portion 181 and when being coupled to the support member 330, supports the support portion 23, thereby providing the mechanical strength of the support member 330.

While this invention has been described in connection with what is presently considered to be practical embodiments, it is to be understood that the invention is not limited to the disclosed embodiments, but, on the contrary, is intended to cover various modifications included within the scope of the appended claims.

## Claims

1. A rechargeable battery (100) comprising:
an electrode assembly (10);
a pouch (20) arranged to house the electrode assembly (10);
a first electrode tab (16) and a second electrode tab (17) connected to the electrode assembly (10), the first and second electrode tabs (16,17) being arranged to protrude from the pouch (20);
a thermally responsive device (18) connected to the first electrode tab (16); and
a support member (30) wherein the thermally responsive device (18) is located between the support member (30) and the pouch (20);
wherein in that the pouch (20) has a support portion (23) extending from a region adjacent the electrode assembly (10) and located at a same side of the pouch (20) as the first electrode tab (16), wherein the support member (30) is arranged to support the thermally responsive device (18) in contact with the support portion (23) of the pouch (20) such that the thermally responsive device (18) is fixed between the support member (30) and the support portion (23);.
wherein the support member (30) comprises a first wall (31) facing the support portion (23) and two side walls (33), optionally further comprising a second wall (32) comprising an opening through which the first electrode tab (16) is arranged to extend;
**characterised in that** the support member (30) comprises a protrusion (34) arranged to extend from the first wall (31) to contact the thermally responsive device (18), wherein the support member (30) further comprises a rib (36) extending from the first wall (31), the rib (36) being arranged to support a connection region of the first electrode tab (16) and the thermally responsive device (18) or to contact the support portion (23).

2. A rechargeable battery (100) according to claim 1, wherein the support member (30) is arranged to press the thermally responsive device (18) towards the pouch.

3. A rechargeable battery (100) according to claim 1 or 2, wherein the support member (30) is coupled to the pouch (20).

4. A rechargeable battery (100) according to any preceding claim, wherein the pouch (20) has a folded structure with two folded portions that are respectively arranged to be folded over opposite side portions of the pouch, the two folded portions being further arranged to extend from the same side of the pouch as the first electrode tab (16) to form two extended folded portions so as to define a support space (S) that is partially enclosed by the two extended folded portions and the support portion (23); wherein the support member (30) is fixed within the support space (S), and the support member (30) is shaped to occupy the support space (S).

5. A rechargeable battery (100) according to any preceding claim, wherein the first electrode tab (16) extends from the pouch (20) in a first direction, and the thermally responsive device (18) is arranged to extend in a second direction that crosses the first direction, the rechargeable battery further comprising a connection tab (19) connected to the thermally responsive device (18) and extending in a third direction.

6. A rechargeable battery (100) according to claim 5, wherein the first electrode tab (16) extends from the pouch (20) in the first direction and is bent over so that the thermally responsive device (18) is adjacent to the support portion (23) of the pouch (20).

7. A rechargeable battery (100) according to any preceding claim, wherein the support member (330) comprises an opening (39) in the first wall (331) at a position corresponding to a connection region of the first electrode tab (16) and the thermally responsive device (18), the opening (39) being arranged to enable welding of the first electrode tab (16) and the thermally responsive device (18).

8. A rechargeable battery (100) according to any preceding claim, further comprising a frame (40) arranged around the pouch (20);
optionally wherein the support member (230) is mechanically connected to the frame (40);
further optionally wherein the support member (230) is mechanically connected to the frame (40) via a male connection member (45) on one of the support member (233) and the frame (40) and a female connection member (46) on the other of the support member (233) and the frame (40).

9. A rechargeable battery (100) according to any preceding claim, wherein the thermally responsive device (18) comprises a thermal fuse or a positive temperature coefficient device.

## Patentansprüche

1. Wiederaufladbare Batterie (100), die Folgendes umfasst:
eine Elektrodenbaugruppe (10);
eine Hülle (20), die dafür ausgelegt ist, die Elektrodenbaugruppe (10) aufzunehmen;
eine ersten Elektrodenlasche (16) und eine zweite Elektrodenlasche (17), die mit der Elektrodenbaugruppe (10) verbunden sind, wobei die erste und die zweite Elektrodenlasche (16, 17) dafür ausgelegt sind, von der Hülle (20) hervorzustehen;
eine auf Wärme ansprechende Vorrichtung (18), die mit der ersten Elektrodenlasche (16) verbunden ist; und
ein Stützelement (30), wobei sich die auf Wärme ansprechende Vorrichtung (18) zwischen dem Stützelement (30) und der Hülle (20) befindet;
wobei die Hülle (20) einen Stützabschnitt (23) hat, der sich von einer Region neben der Elektrodenbaugruppe (10) erstreckt und sich auf derselben Seite der Hülle (20) wie die erste Elektrodenlasche (16) befindet, wobei das Stützelement (30) dafür ausgelegt ist, die auf Wärme ansprechende Vorrichtung (18) in Kontakt mit dem Stützabschnitt (23) der Hülle (20) so zu stützen, dass die auf Wärme ansprechende Vorrichtung (18) zwischen dem Stützelement (30) und dem Stützabschnitt (23) fixiert ist;
wobei das Stützelement (30) eine erste Wand (31) umfasst, die dem Stützabschnitt (23) zugewandt ist, und zwei Seitenwände (33) umfasst, und optional des Weiteren eine zweite Wand (32) umfasst, die eine Öffnung umfasst, die dafür vorgesehen ist, dass sich die erste Elektrodenlasche (16) durch sie hindurch erstreckt;
**dadurch gekennzeichnet, dass** das Stützelement (30) einen Vorsprung (34) umfasst, der dafür ausgelegt ist, sich von der ersten Wand (31) zu erstrecken, um die auf Wärme ansprechende Vorrichtung (18) zu berühren, wobei das Stützelement (30) des Weiteren eine Rippe (36) umfasst, die sich von der ersten Wand (31) erstreckt, wobei die Rippe (36) dafür ausgelegt ist, eine Verbindungsregion der ersten Elektrodenlasche (16) und der auf Wärme ansprechenden Vorrichtung (18) zu stützen oder den Stützabschnitt (23) zu berühren.

2. Wiederaufladbare Batterie (100) nach Anspruch 1, wobei das Stützelement (30) dafür ausgelegt ist, die auf Wärme ansprechende Vorrichtung (18) in Richtung der Hülle zu drücken.

3. Wiederaufladbare Batterie (100) nach Anspruch 1 oder 2, wobei das Stützelement (30) mit der Hülle (20) gekoppelt ist.

4. Wiederaufladbare Batterie (100) nach einem der vorangehenden Ansprüche, wobei die Hülle (20) eine gefaltete Struktur mit zwei gefalteten Abschnitten hat, die jeweils dafür ausgelegt sind, über gegenüberliegende Seitenabschnitte der Hülle gefaltet zu werden, wobei die zwei gefalteten Abschnitte des Weiteren dafür ausgelegt sind, sich von derselben Seite der Hülle wie die erste Elektrodenlasche (16) zu erstrecken, um zwei verlängerte gefaltete Abschnitte zu bilden, um einen Stützraum (S) zu bilden, der teilweise von den zwei verlängerten gefalteten Abschnitten und dem Stützabschnitt (23) umschlossen wird; wobei das Stützelement (30) innerhalb des Stützraums (S) fixiert ist, und das Stützelement (30) so geformt ist, dass es den Stützraum (S) ausfüllt.

5. Wiederaufladbare Batterie (100) nach einem der vorangehenden Ansprüche, wobei sich die erste Elektrodenlasche (16) von der Hülle (20) in einer ersten Richtung erstreckt, und die auf Wärme ansprechende Vorrichtung (18) dafür ausgelegt ist, sich in einer zweiten Richtung zu erstrecken, welche die erste Richtung kreuzt, wobei die wiederaufladbare Batterie des Weiteren eine Verbindungslasche (19) umfasst, die mit der auf Wärme ansprechenden Vorrichtung (18) verbunden ist und sich in einer dritten Richtung erstreckt.

6. Wiederaufladbare Batterie (100) nach Anspruch 5, wobei sich die erste Elektrodenlasche (16) von der Hülle (20) in der ersten Richtung erstreckt und so umgebogen ist, dass sich die auf Wärme ansprechende Vorrichtung (18) neben dem Stützabschnitt (23) der Hülle (20) befindet.

7. Wiederaufladbare Batterie (100) nach einem der vorangehenden Ansprüche, wobei das Stützelement (330) eine Öffnung (39) in der ersten Wand (331) an einer Position umfasst, die einer Verbindungsregion der ersten Elektrodenlasche (16) und der auf Wärme ansprechenden Vorrichtung (18) entspricht, wobei die Öffnung (39) dafür ausgelegt ist, das Schweißen der ersten Elektrodenlasche (16) und der auf Wärme ansprechenden Vorrichtung (18) zu ermöglichen.

8. Wiederaufladbare Batterie (100) nach einem der vorangehenden Ansprüche, die des Weiteren einen Rahmen (40) umfasst, der um die Hülle (20) herum angeordnet ist;
wobei das Stützelement (230) optional mechanisch mit dem Rahmen (40) verbunden ist;
wobei des Weiteren das Stützelement (230) optional mechanisch mit dem Rahmen (40) über ein Steckverbinderelement (45) an einem des Stützelements (233) und des Rahmens (40) und ein Buchsenverbindungselement (46) an dem anderen des Stützelements (233) und des Rahmens (40) verbunden ist.

9. Wiederaufladbare Batterie (100) nach einem der vorangehenden Ansprüche, wobei die auf Wärme ansprechende Vorrichtung (18) eine thermische Sicherung oder eine Vorrichtung mit einem positiven Temperaturkoeffizienten umfasst.

## Revendications

1. Batterie rechargeable (100) comprenant :
un ensemble d'électrodes (10) ;
une poche (20) agencée pour recevoir l'ensemble d'électrodes (10) ;
une première languette d'électrode (16) et une deuxième languette d'électrode (17) reliées à l'ensemble d'électrodes (10), les première et deuxième languettes d'électrode (16, 17) étant agencées de manière à faire saillie de la poche (20) ;
un dispositif thermosensible (18) relié à la première languette d'électrode (16) ; et
un élément de support (30) où le dispositif thermosensible (18) est situé entre l'élément de support (30) et la poche (20) ;
où la poche (20) a une partie de support (23) s'étendant à partir d'une zone adjacente à l'ensemble d'électrodes (10) et située à un même côté de la poche (20) que la première languette d'électrode (16), où l'élément de support (30) est agencé de manière à supporter le dispositif thermosensible (18) en contact avec la partie de support (23) de la poche (20) de sorte que le dispositif thermosensible (18) soit fixé entre l'élément de support (30) et la partie de support (23) ;
où l'élément de support (30) comprend une première paroi (31) faisant face à la partie de support (23) et deux parois latérales (33), comprenant éventuellement en outre une deuxième paroi (32) comprenant une ouverture à travers laquelle la première languette d'électrode (16) est agencée de manière à s'étendre ;
**caractérisé en ce que** l'élément de support (30) comprend une protubérance (34) agencée de manière à s'étendre à partir de la première paroi (31) pour entrer en contact avec le dispositif thermosensible (18), où l'élément de support (30) comprend en outre une nervure (36) s'étendant à partir de la première paroi (31), la nervure (36) étant agencée pour supporter une zone de liaison de la première languette d'électrode (16) et du dispositif thermosensible (18) ou pour entrer en contact avec la partie de support (23).

2. Batterie rechargeable (100) selon la revendication 1, dans laquelle l'élément de support (30) est agencé de manière à presser le dispositif thermosensible (18) vers la poche.

3. Batterie rechargeable (100) selon la revendication 1 ou 2, dans laquelle l'élément de support (30) est couplé à la poche (20).

4. Batterie rechargeable (100) selon l'une des revendications précédentes, dans laquelle la poche (20) a une structure pliée avec deux parties pliées qui sont agencées respectivement de manière à être pliées sur des parties latérales opposées de la poche, les deux parties pliées étant en outre agencées de manière à s'étendre à partir du même côté de la poche que la première languette d'électrode (16) pour former deux parties pliées étendues de manière à définir un espace de support (S) qui est partiellement enfermé par les deux parties pliées étendues et la partie de support (23) ; où l'élément de support (30) est fixé à l'intérieur de l'espace de support (S), et l'élément de support (30) est conformé de manière à occuper l'espace de support (S).

5. Batterie rechargeable (100) selon l'une des revendications précédentes, dans laquelle la première languette d'électrode (16) s'étend à partir de la poche (20) dans une première direction, et le dispositif thermosensible (18) est agencé de manière à s'étendre dans une deuxième direction qui croise la première direction, la batterie rechargeable comprenant en outre une languette de liaison (19) reliée au dispositif thermosensible (18) et s'étendant dans une troisième direction.

6. Batterie rechargeable (100) selon la revendication 5, dans laquelle la première languette d'électrode (16) s'étend à partir de la poche (20) dans la première direction et est courbée de sorte que le dispositif thermosensible (18) soit adjacent à la partie de support (23) de la poche (20).

7. Batterie rechargeable (100) selon l'une des revendications précédentes, dans laquelle l'élément de support (330) comprend une ouverture (39) dans la première paroi (331) à une position correspondant à une zone de liaison de la première languette d'électrode (16) et du dispositif thermosensible (18), l'ouverture (39) étant agencée de manière à permettre le soudage de la première languette d'électrode (16) et du dispositif thermosensible (18).

8. Batterie rechargeable (100) selon l'une des revendications précédentes, comprenant en outre un cadre (40) agencé autour de la poche (20) ;
où éventuellement l'élément de support (230) est relié mécaniquement au cadre (40) ;
où éventuellement en outre l'élément de support (230) est relié mécaniquement au cadre (40) par l'intermédiaire d'un élément de liaison mâle (45) sur l'un parmi l'élément de support (233) et le cadre (40) et d'un élément de liaison femelle (46) sur l'autre parmi l'élément de support (233) et le cadre (40).

9. Batterie rechargeable (100) selon l'une des revendications précédentes, dans laquelle le dispositif thermosensible (18) comprend un fusible thermique ou un dispositif à coefficient de température positif.
